# EUROPEAN PATENT APPLICATION

(11) **EP 1 553 158 A1**
(43) Date of publication of application: **13.07.2005**
(21) Application number: 05075019.9
(22) Date of filing: 06.01.2005
(51) Int. Cl.: C10M 143/06, C10M 171/02

(54) **Power Transmission Fluids with Enhanced Anti-Shudder Characteristics**

(30) Priority: 07.01.2004 US 752805
(71) Applicant: Afton Chemical Corporation, Richmond, VA 23219 (US)
(72) Inventor: Ozbalik, Nubar, Midlothian Virginia 23113 (US); Tersigni, Samuel H., Glen Allen, VA 23060 (US)
(74) Representative: Dunleavy, Kevin James

(57) **Abstract**

A power transmission fluid composition having improved characteristics. The fluid may comprise a base oil and an additive composition including a viscosity index improving amount of a polyisoalkylene component having a molecular weight ranging from about 300 to about 3000 weight average molecular weight as determined by gel permeation chromatography. The power transmission fluid exhibits a kinematic viscosity (KV at 100°C) of less than about 9 centistokes and a Brookfield viscosity (BV at -40°C) of less than about 30,000 centipoise. Also the friction versus velocity curve for the fluid has a more positive slope at high speeds compared to similar fluids in the absence of the polyisoalkylene component.

## Description

### FIELD

The present disclosure relates to a power transmission fluid having improved characteristics for high and low speed transmission applications. The power transmission fluid disclosed here may include a fluid suitable for an automatic transmission (ATF), a manual transmission, a dual clutch transmission, and/or a continuously variable transmission.

### BACKGROUND

New and advanced transmission systems are being developed by the automotive industry. These new systems often involve high energy requirements. Therefore, friction materials technology must be developed to meet the increasing energy requirements of these advanced systems.

The high speeds generated during engagement and disengagement of some of the newer transmission and braking systems mean that a friction material must be able to maintain a relatively constant friction throughout the engagement. It is important that the frictional engagement be relatively constant over a wide range of speeds and temperatures in order to minimize "shuddering" of materials during braking or during transmission power shift from one gear to another.

In particular, new high energy type friction materials are being developed and used. The new high energy friction materials are able to withstand high speeds wherein internal transmission plate surface speeds are up to about 65 m/second. It is also important that the friction material be useful under limited lubrication conditions. One such material being developed for automatic transmission applications is a carbon fiber containing material.

In view of new materials and greater demands on transmissions, automotive power transmission fluids are called upon to provide specific frictional properties under very demanding conditions of speed, temperature, and pressure. Changes in a fluid's frictional properties as a function of relative sliding speed, temperature, or pressure may cause performance degradation immediately noticeable to the vehicle operator. Such effects may include unacceptably long or short gear shifts, vehicle shudder or vibration, noise, and/or harsh shifts ("gear change shock"). Thus, there is a need for transmission fluids that exhibit improved characteristics such as shear stability at high temperatures and pressures. Such fluids would reduce equipment and performance problems while improving the interval between fluid changes. By enabling smooth engagement of torque converter and shifting clutches, these fluids may reduce shudder, vibration, and/or noise, and in some cases improve fuel economy, over a longer fluid lifetime.

Friction modifiers are used in automatic transmission fluids to decrease friction between surfaces (e.g., the members of a torque converter clutch or a shifting clutch) at low sliding speeds. The result is a friction vs. velocity (u-v) curve that has a positive slope, which in turn leads to smooth clutch engagements and minimizes "stick-slip" behavior (e.g., shudder, noise, and harsh shifts). Many conventional friction modifiers, however, are thermally unstable. Upon prolonged exposure to heat, these additives decompose, and the benefits they confer on clutch performance may be lost.

### SUMMARY OF THE EMBODIMENTS

Power transmission fluids formulated according to the present disclosure provide improved shear stability, thereby providing improved performance for smooth engagement of torque converter and shifting clutches and minimized shudder, vibration and/or noise, and/or improved fuel economy.

In an embodiment, a power transmission fluid composition having improved characteristics is provided. The fluid includes a base oil and an additive composition including a viscosity index improving amount of a polyisoalkylene component having a molecular weight ranging from about 300 to about 10,000 weight average molecular weight as determined by gel permeation chromatography. The power transmission fluid exhibits a kinematic viscosity (KV at 100°C) of less than about 9 centistokes and a Brookfield viscosity (BV at -40°C) of less than about 30,000 centipoise. Also, a friction versus velocity curve for the fluid has a more positive slope at high speeds compared to similar fluids in the absence of the polyisoalkylene component.

Another embodiment provides a method of improving shear stability for a transmission fluid. The method includes providing a base oil and adding to the base oil an additive composition to provide a transmission fluid. The transmission fluid may contain from about 1 to about 9 weight percent (wt%) of a polyisoalkylene component having a molecular weight ranging from about 300 to about 10,000 weight average molecular weight as determined by gel permeation chromatography. Or, stated alternatively, the additive composition may contain about 10 to about 90 wt% of the polyisoalkylene component. The base oil containing the additive composition may exhibit a kinematic viscosity (KV at 100°C) of less than about 9 centistokes and a Brookfield viscosity (BV at -40°C) of less than about 30,000 centipoise. Also, a friction versus velocity curve for the oil and additive composition has a more positive slope at high speeds compared to similar fluids in the absence of the polyisoalkylene component.

Yet another embodiment provides an additive concentrate for a transmission fluid. The additive concentrate includes at least a first viscosity index improving thickening agent and a second viscosity index improving thickening agent. The first thickening agent is a polyisoalkylene having a molecular weight ranging from about 500 to about 10,000 weight average molecular weight as determined by gel permeation chromatography. The second thickening agent is selected from polymethacrylates, olefin copolymers, and styrene-maleic esters. A total amount of the first and second viscosity index improvers present in the additive concentrate may range from about 10 to about 90 wt% and the balance of the additive concentrate may comprise from about 5 wt% to about 25 wt% base oil and from about 0.5 to about 10 wt% other performance additives. A power transmission fluid containing from about 1 wt% to about 30 wt% of the additive concentrate may exhibit a kinematic viscosity (KV at 100°C) of less than about 9 centistokes and a Brookfield viscosity (BV at -40°C) of less than about 30,000 centipoise. Also, a friction versus velocity curve for the fluid has a more positive slope at high speeds compared to similar fluids in the absence of the polyisoalkylene component.

Power transmission fluids of the foregoing embodiments are formulated to deliver improved shear stability, allowing the fluid to change very little when the fluid is subjected to mechanical, thermal, and/or oxidative stresses. Such power transmission fluids are suitable for use in transmissions where high stressing of the lubricant is routine, such as transmissions with a slipping torque converter, a lock-up torque converter, a starting clutch, and/or one or more shifting clutches. Such transmissions may include four-, five-, six-, or seven-speed transmissions, or may include continuously variable transmissions (chain, belt, and disk type). They may also be used in manual transmissions, including automated manual and dual-clutch transmissions. A particular advantage of the fluids described herein is their improved characteristics with respect to transmissions containing advanced friction materials such as carbon fiber friction plates.

Both the foregoing general description and the following detailed description are exemplary and explanatory only and are intended to provide further explanation of the present invention, as claimed.

### BRIEF DESCRIPTION OF THE DRAWING

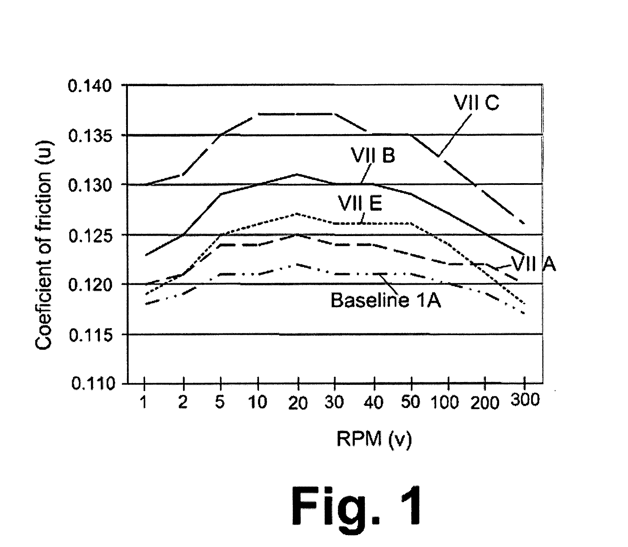

FIG. 1 illustrates the u-v friction profile of transmission fluids containing various viscosity index improvers.

### DETAILED DESCRIPTION OF EMBODIMENTS

As used herein, the term "hydrocarbyl substituent" or "hydrocarbyl group" is used in its ordinary sense, which is well-known to those skilled in the art. Specifically, it refers to a group having a carbon atom directly attached to the remainder of a molecule and having a predominantly hydrocarbon character. Examples of hydrocarbyl groups include:
(1) hydrocarbon substituents, that is, aliphatic (e.g., alkyl or alkenyl), alicyclic (e.g., cycloalkyl, cycloalkenyl) substituents, and aromatic-, aliphatic-, and alicyclic-substituted aromatic substituents, as well as cyclic substituents wherein the ring is completed through another portion of the molecule (e.g., two substituents together form an alicyclic radical);
(2) substituted hydrocarbon substituents, that is, substituents containing non-hydrocarbon groups which, in the context of the description herein, do not alter the predominantly hydrocarbon substituent (e.g., halo (especially chloro and fluoro), hydroxy, alkoxy, mercapto, alkylmercapto, nitro, nitroso, and sulfoxy);
(3) hetero-substituents, that is, substituents which, while having a predominantly hydrocarbon character, in the context of this description, contain other than carbon in a ring or chain otherwise composed of carbon atoms. Hetero-atoms include sulfur, oxygen, nitrogen, and encompass substituents such as pyridyl, furyl, thienyl, and imidazolyl. In general, no more than two, or as a further example, no more than one, non-hydrocarbon substituent will be present for every ten carbon atoms in the hydrocarbyl group; typically, there will be one non-hydrocarbon substituent in the hydrocarbyl group.

As power transmission fluids operate under increasingly severe conditions, the oils used to lubricate those transmissions should be formulated to endure higher temperatures and pressures. To reduce equipment problems and increase the interval between transmission oil changes, the oil additive packages should be formulated so that important oil properties change as little as possible in the face of these stresses. In particular, the shear stability properties of the oil, which depend in great measure on the additive package, should stay relatively constant over a wide range of temperatures and operating speeds. This ensures smooth engagement of torque converter and shifting clutches and minimized shudder, vibration and noise, and improved fuel economy. It has been found that the components herein disclosed, when blended into a base oil, impart to that oil greatly improved shear stability.

In an embodiment, a power transmission fluid may include a base oil and an additive composition. The additive composition includes a viscosity index improving amount of a polyisoalkylene component. The polyisoalkylene component may have a molecular weight ranging from about 300 to about 10,000 weight average molecular weight as determined by gel permeation chromatography. As a further example, the polyisoalkylene component may have a molecular weight ranging from about 500 to about 3000 weight average molecular weight. And as an even further example, the polyisoalkylene component may have a molecular weight ranging from about 700 to about 2500 weight average molecular weight. When used in a viscosity index improving amount the polyisoalkylene component provides a power transmission fluid with a kinematic viscosity (KV at 100°C) of less than about 9 centistokes (cSt) and a Brookfield viscosity (BV at -40°C) of less than about 30,000 centipoise (cp). A friction versus velocity curve for the fluid exhibits a positive slope at high speeds compared to a similar fluid in the absence of the polyisoalkylene component. Of the polyisoalkylene components, examples include poly(C₃-C₆)isoalkylene components such as polyisobutylene.

The polyisoalkylene component may be derived from olefinic hydrocarbon monomers such as isobutene made by cracking a hydrocarbon stream to produce a hydrocarbon mixture of essentially C₄-hydrocarbons. For example, thermocracking processes (streamcracker) produce C₄ cuts having C₄ paraffins and C₄ olefins, with a major component being isobutene. Butadiene and acetylene are substantially removed from the stream by additional selective hydrogenation or extractive distillation techniques.

A polymerization reaction used to form a polyisoalkylene component from its monomers is generally carried out in the presence of a conventional Ziegler-Natta or metallocene catalyst system. The polymerization medium can include solution, slurry, or gas phase processes, as known to those skilled in the art. When solution polymerization is employed, the solvent may be any suitable inert hydrocarbon solvent that is liquid under reaction conditions for polymerization of alpha-olefins; examples of satisfactory hydrocarbon solvents include straight chain paraffins having from 5 to 8 carbon atoms, such as hexane. Aromatic hydrocarbons, aromatic hydrocarbons having a single benzene nucleus, such as benzene and toluene; and saturated cyclic hydrocarbons having boiling point ranges approximating those of the straight chain paraffinic hydrocarbons and aromatic hydrocarbons described above, are suitable. The solvent selected may be a mixture of one or more of the foregoing hydrocarbons. When slurry polymerization is employed, the liquid phase for polymerization may be liquid propylene. It is desirable that the polymerization medium be free of substances that will interfere with the catalyst components. The polymerization process may be terminated when a polyisoalkylene compound having a weight average molecular weight ranging, for example, from about 300 to about 10,000, from about 700 to about 5,000, or from about 700 to about 2,500 is obtained.

A linear version of the polyalkylene component may be used in addition to or in the alternative to the isomerized component discussed herein.

A viscosity index improving amount of polyisoalkylene component may be present in a power transmission fluid in an amount from about 1 to about 30 wt% of the total weight of the transmission fluid. As a further example, the polyisoalkylene component may be present in an amount of about 2 wt% to about 9 wt% in the transmission fluid.

While a suitable transmission fluid may be provided with the polyisoalkylene component as the sole viscosity index improver, embodiments may also include a combination of viscosity index improvers. For example, non-dispersant viscosity index improvers may be used in combination with the foregoing polyisoalkylene viscosity index improver. Such non-dispersant viscosity index improvers include, but are not limited to, olefin copolymers, polyalkylmethacrylates, and styrene-maleic esters. The viscosity index improver may be supplied in the form of a solution in an inert solvent, typically a mineral oil solvent, which usually is a severely refined mineral oil.

Suitable commercially available materials for use as viscosity index improvers in combination with the polyisoalkylene component include styrene-maleic esters such as are available under the trade designation LUBRIZOL® 3702, LUBRIZOL® 3706 and LUBRIZOL® 3715 available from The Lubrizol Corporation; polyalkylmethacrylates such as those available from ROHM GmbH (Darmstadt, Germany) under the trade designations: VISCOPLEX® 5543, VISCOPLEX® 5548, VISCOPLEX® 5549, VISCOPLEX® 5550, VISCOPLEX® 5551 and VISCOPLEX® 5151, from Rohm & Haas Company (Philadelphia, Pa.) under the trade designations ACRYLOID® 1277, ACRYLOID® 1265 and ACRYLOID® 1269, and from Ethyl Corporation (Richmond, Va.) under the trade designation HiTEC® 5710, HiTEC® 5738, HiTEC® 5739, and HiTEC® 5742; and olefin copolymer viscosity index improvers such as HiTEC® 5747, HiTEC® 5751, HiTEC® 5770, and HiTEC® 5772, available from Ethyl Corporation and SHELLVIS® 200 available from Shell Chemical Company. Mixtures of the foregoing products can also be used as well as dispersant and dispersant-antioxidant viscosity index improvers.

### Base Oil

Base oils suitable for use in formulating transmission fluid compositions may be selected from any of the synthetic or natural oils or mixtures thereof. Natural oils include animal oils and vegetable oils (e.g., castor oil, lard oil) as well as mineral lubricating oils such as liquid petroleum oils and solvent treated or acid-treated mineral lubricating oils of the paraffinic, naphthenic or mixed paraffinic-naphthenic types. Oils derived from coal or shale are also suitable. The base oil typically has a viscosity of about 2 to about 15 cSt or, as a further example, about 2 to about 10 cSt at 100° C. Further, gas-to-liquid stocks are also suitable.

The synthetic base oils include alkyl esters of dicarboxylic acids, polyglycols and alcohols, poly-alpha-olefins, including polybutenes, alkyl benzenes, organic esters of phosphoric acids, and polysilicone oils. Synthetic oils include hydrocarbon oils such as polymerized and interpolymerized olefins (e.g., polybutylenes, polypropylenes, propylene isobutylene copolymers, etc.); poly(1-hexenes), poly-(1-octenes), poly(1-decenes), etc. and mixtures thereof; alkylbenzenes (e.g., dodecylbenzenes, tetradecylbenzenes, di-nonylbenzenes, di-(2-ethylhexyl)benzenes, etc.); polyphenyls (e.g., biphenyls, terphenyl, alkylated polyphenyls, etc.); alkylated diphenyl ethers and alkylated diphenyl sulfides and the derivatives, analogs and homologs thereof and the like.

Alkylene oxide polymers and interpolymers and derivatives thereof where the terminal hydroxyl groups have been modified by esterification, etherification, etc., constitute another class of known synthetic oils that may be used. Such oils are exemplified by the oils prepared through polymerization of ethylene oxide or propylene oxide, the alkyl and aryl ethers of these polyoxyalkylene polymers (e.g., methylpolyisopropylene glycol ether having an average molecular weight of about 1000, diphenyl ether of polyethylene glycol having a molecular weight of about 500-1000, diethyl ether of polypropylene glycol having a molecular weight of about 1000-1500, etc.) or mono- and polycarboxylic esters thereof, for example, the acetic acid esters, mixed C₃₋₈ fatty acid esters, or the C₁₃ Oxo acid diester of tetraethylene glycol.

Another class of synthetic oils that may be used includes the esters of dicarboxylic acids (e.g., phthalic acid, succinic acid, alkyl succinic acids, alkenyl succinic acids, maleic acid, azelaic acid, suberic acid, sebacic acid, fumaric acid, adipic acid, linoleic acid dimer, malonic acid, alkyl malonic acids, alkenyl malonic acids, etc.) with a variety of alcohols (e.g., butyl alcohol, hexyl alcohol, dodecyl alcohol, 2-ethylhexyl alcohol, ethylene glycol, diethylene glycol monoether, propylene glycol, etc.) Specific examples of these esters include dibutyl adipate, di(2-ethylhexyl)sebacate, di-n-hexyl fumarate, dioctyl sebacate, diisooctyl azelate, diisodecyl azelate, dioctyl phthalate, didecyl phthalate, dieicosyl sebacate, the 2-ethylhexyl diester of linoleic acid dimer, the complex ester formed by reacting one mole of sebacic acid with two moles of tetraethylene glycol and two moles of 2-ethylhexanoic acid and the like.

Esters useful as synthetic oils also include those made from C₅ to C₁₂ monocarboxylic acids and polyols and polyol ethers such as neopentyl glycol, trimethylol propane, pentaerythritol, dipentaerythritol, tripentaerythritol, etc.

Hence, the base oil used which may be used to make the transmission fluid compositions as described herein may be selected from any of the base oils in Groups I-V as specified in the American Petroleum Institute (API) Base Oil Interchangeability Guidelines. Such base oil groups are as follows:

| Base Oil Group¹ | Sulfur (wt%) | | Saturates (wt%) | Viscosity Index |
|---|---|---|---|---|
| Group I | > 0.03 | and/or | < 90 | 80 to 120 |
| Group II | ≤ 0.03 | And | ≥ 90 | 80 to 120 |
| Group III | ≤ 0.03 | And | ≥ 90 | ≥ 120 |
| Group IV | all polyalphaolefins (PAOs) | | | |
| Group V | all others not included in Groups I-IV | | | |

| | | | | |
|---|---|---|---|---|
| ¹Groups I-III are mineral oil base stocks. | | | | |

As set forth above, the base oil may be a poly-alpha-olefin (PAO). Typically, the poly-alpha-olefins are derived from monomers having from about 4 to about 30, or from about 4 to about 20, or from about 6 to about 16 carbon atoms. Examples of useful PAOs include those derived from octene, decene, mixtures thereof, and the like. PAOs may have a viscosity of from about 2 to about 15, or from about 3 to about 12, or from about 4 to about 8 cSt at 100° C. Examples of PAOs include 4 cSt at 100° C poly-alpha-olefins, 6 cSt at 100° C poly-alpha-olefins, and mixtures thereof. Mixtures of mineral oil with the foregoing poly-alpha-olefins may be used.

The base oil may be an oil derived from Fischer-Tropsch synthesized hydrocarbons. Fischer-Tropsch synthesized hydrocarbons are made from synthesis gas containing H₂ and CO using a Fischer-Tropsch catalyst. Such hydrocarbons typically require further processing in order to be useful as the base oil. For example, the hydrocarbons may be hydroisomerized using processes disclosed in U.S. Pat. Nos. 6,103,099 or 6,180,575; hydrocracked and hydroisomerized using processes disclosed in U.S. Pat. Nos. 4,943,672 or 6,096,940; dewaxed using processes disclosed in U.S. Pat. No. 5,882,505; or hydroisomerized and dewaxed using processes disclosed in U.S. Pat. Nos. 6,013,171; 6,080,301; or 6,165,949.

Unrefined, refined and rerefined oils, either natural or synthetic (as well as mixtures of two or more of any of these) of the type disclosed hereinabove can be used in the base oils. Unrefined oils are those obtained directly from a natural or synthetic source without further purification treatment. For example, a shale oil obtained directly from retorting operations, a petroleum oil obtained directly from primary distillation or ester oil obtained directly from an esterification process and used without further treatment would be an unrefined oil. Refined oils are similar to the unrefined oils except they have been further treated in one or more purification steps to improve one or more properties. Many such purification techniques are known to those skilled in the art such as solvent extraction, secondary distillation, acid or base extraction, filtration, percolation, etc. Rerefined oils are obtained by processes similar to those used to obtain refined oils applied to refined oils which have been already used in service. Such rerefined oils are also known as reclaimed or reprocessed oils and often are additionally processed by techniques directed to removal of spent additives, contaminants, and oil breakdown products.

The base oil may be combined with an additive composition as disclosed in embodiments herein to provide a power transmission fluid. The base oil may be present in the power transmission fluid in an amount from about 50 wt% to about 95 wt %.

### Other Optional Components

The power transmission fluid may also include conventional additives of the type used in automatic transmission fluid formulations in addition to the components described above. Such additives include, but are not limited to, ashless dispersants, friction modifiers, antioxidants, extreme pressure additives, corrosion inhibitors, antiwear additives, antirust additives, metal deactivators, antifoamants, pour point depressants, air entrainment additives, metallic detergents, and/or seal swell agents.

### Ashless Dispersants

The ashless dispersant which may be used in the transmission fluids as described herein may be selected from any of the ashless dispersants known to those skilled in the art. Suitable ashless dispersants may include ashless dispersants such as succinimide dispersants, Mannich base dispersants, and polymeric polyamine dispersants.
Hydrocarbyl-substituted succinic acylating agents are used to make hydrocarbyl-substituted succinimides. The hydrocarbyl-substituted succinic acylating agents include, but are not limited to, hydrocarbyl-substituted succinic acids, hydrocarbyl-substituted succinic anhydrides, the hydrocarbyl-substituted succinic acid halides (especially the acid fluorides and acid chlorides), and the esters of the hydrocarbyl-substituted succinic acids and lower alcohols (e.g., those containing up to 7 carbon atoms), that is, hydrocarbyl-substituted compounds which can function as carboxylic acylating agents.

Hydrocarbyl substituted acylating agents are made by reacting a polyolefin or chlorinated polyolefin of appropriate molecular weight with maleic anhydride. Similar carboxylic reactants can be used to make the acylating agents. Such reactants may include, but are not limited to, maleic acid, fumaric acid, malic acid, tartaric acid, itaconic acid, itaconic anhydride, citraconic acid, citraconic anhydride, mesaconic acid, ethylmaleic anhydride, dimethylmaleic anhydride, ethylmaleic acid, dimethylmaleic acid, hexylmaleic acid, and the like, including the corresponding acid halides and lower aliphatic esters.

The molecular weight of the olefin can vary depending upon the intended use of the substituted succinic anhydrides. Typically, the substituted succinic anhydrides will have a hydrocarbyl group of from 8-500 carbon atoms. However, substituted succinic anhydrides used to make lubricating oil dispersants will typically have a hydrocarbyl group of about 40-500 carbon atoms. Dispersants having a hydrocarbyl group containing from about 8 to about 150 carbon atoms are referred to herein as "relatively low molecular weight dispersants." Whereas dispersants having a hydrocarbyl group containing more than about 150 carbon atoms up to about 500 carbon atoms are referred to herein as "relatively high molecular weight dispersants." With the very high molecular weight substituted succinic anhydrides, it is more accurate to refer to number average molecular weight (Mn) since the olefins used to make these substituted succinic anhydrides may include a mixture of different molecular weight components resulting from the polymerization of low molecular weight olefin monomers such as ethylene, propylene and isobutylene.

The mole ratio of maleic anhydride to olefin can vary widely. It may vary, for example, from about 5:1 to about 1:5, or for example, from about 1:1 to about 3:1. With olefins such as polyisobutylene having a number average molecular weight of about 500 to about 7000, or as a further example, about 800 to about 3000 or higher and the ethylene-alpha-olefin copolymers, the maleic anhydride may be used in stoichiometric excess, e.g. 1.1 to 3 moles maleic anhydride per mole of olefin. The unreacted maleic anhydride can be vaporized from the resultant reaction mixture.

Polyalkenyl succinic anhydrides may be converted to polyalkyl succinic anhydrides by using conventional reducing conditions such as catalytic hydrogenation. For catalytic hydrogenation, a suitable catalyst is palladium on carbon. Likewise, polyalkenyl succinimides may be converted to polyalkyl succinimides using similar reducing conditions.

The polyalkyl or polyalkenyl substituent on the succinic anhydrides employed herein is generally derived from polyolefins which are polymers or copolymers of mono-olefins, particularly 1-mono-olefins, such as ethylene, propylene and butylene. The mono-olefm employed may have about 2 to about 24 carbon atoms, or as a further example, about 3 to about 12 carbon atoms. Other suitable mono-olefins include propylene, butylene, particularly isobutylene, 1-octene and 1-decene. Polyolefms prepared from such mono-olefins include polypropylene, polybutene, polyisobutene, and the polyalphaolefins produced from 1-octene and 1-decene.

In some embodiments, the ashless dispersant may include one or more alkenyl succinimides of an amine having at least one primary amino group capable of forming an imide group. The alkenyl succinimides may be formed by conventional methods such as by heating an alkenyl succinic anhydride, acid, acid-ester, acid halide, or lower alkyl ester with an amine containing at least one primary amino group. The alkenyl succinic anhydride may be made readily by heating a mixture of polyolefin and maleic anhydride to about 180°-220°C. The polyolefin may be a polymer or copolymer of a lower monoolefin such as ethylene, propylene, isobutene and the like, having a number average molecular weight in the range of about 300 to about 3000 as determined by gel permeation chromatography (GPC).

Amines which may be employed in forming the ashless dispersant include any that have at least one primary amino group which can react to form an imide group and at least one additional primary or secondary amino group and/or at least one hydroxyl group. A few representative examples are: N-methyl-propanediamine, N-dodecylpropanediamine, N-aminopropyl-piperazine, ethanolamine, N-ethanol-ethylenediamine, and the like.

Suitable amines may include alkylene polyamines, such as propylene diamine, dipropylene triamine, di-(1,2-butylene)triamine, and tetra-(1,2-propylene)pentamine. A further example includes the ethylene polyamines which can be depicted by the formula H₂N(CH₂CH₂NH)ₙH, wherein n may be an integer from about one to about ten. These include: ethylene diamine, diethylene triamine (DETA), triethylene tetramine (TETA), tetraethylene pentamine (TEPA), pentaethylene hexamine (PEHA), and the like, including mixtures thereof in which case n is the average value of the mixture. Such ethylene polyamines have a primary amine group at each end so they may form mono-alkenylsuccinimides and bis-alkenylsuccinimides. Commercially available ethylene polyamine mixtures may contain minor amounts of branched species and cyclic species such as N-aminoethyl piperazine, N,N'-bis(aminoethyl)piperazine, N,N'-bis(piperazinyl)ethane, and like compounds. The commercial mixtures may have approximate overall compositions falling in the range corresponding to diethylene triamine to tetraethylene pentamine. The molar ratio of polyalkenyl succinic anhydride to polyalkylene polyamines may be from about 1:1 to about 3.0:1.

In some embodiments, the ashless dispersant may include the products of the reaction of a polyethylene polyamine, e.g. triethylene tetramine or tetraethylene pentamine, with a hydrocarbon substituted carboxylic acid or anhydride made by reaction of a polyolefin, such as polyisobutene, of suitable molecular weight, with an unsaturated polycarboxylic acid or anhydride, e.g., maleic anhydride, maleic acid, fumaric acid, or the like, including mixtures of two or more such substances.

Polyamines that are also suitable in preparing the dispersants described herein include N-arylphenylenediamines, such as N-phenylphenylenediamines, for example, N-phenyl-1,4-phenylenediamine, N-phenyl-1,3-phenylendiamine, and N-phenyl-1,2-phenylenediamine; aminothiazoles such as aminothiazole, aminobenzothiazole, aminobenzothiadiazole and aminoalkylthiazole; aminocarbazoles; aminoindoles; aminopyrroles; amino-indazolinones; aminomercaptotriazoles; aminoperimidines; aminoalkyl imidazoles, such as 1-(2-aminoethyl) imidazole, 1-(3-aminopropyl) imidazole; and aminoalkyl morpholines, such as 4-(3-aminopropyl) morpholine. These polyamines are described in more detail in U.S. Pat. Nos. 4,863,623 and 5,075,383. Such polyamines can provide additional benefits, such as anti-wear and antioxidancy, to the final products.

Additional polyamines useful in forming the hydrocarbyl-substituted succinimides include polyamines having at least one primary or secondary amino group and at least one tertiary amino group in the molecule as taught in U.S. Pat. Nos. 5,634,951 and 5,725,612. Examples of suitable polyamines include N,N,N",N"-tetraalkyldialkylenetriamines (two terminal tertiary amino groups and one central secondary amino group), N,N,N',N"-tetraalkyltrialkylenetetramines (one terminal tertiary amino group, two internal tertiary amino groups and one terminal primary amino group), N,N,N',N",N'"-pentaalkyltrialkylenetetramines (one terminal tertiary amino group, two internal tertiary amino groups and one terminal secondary amino group), tris(dialkylaminoalkyl)aminoalkylmethanes (three terminal tertiary amino groups and one terminal primary amino group), and like compounds, wherein the alkyl groups are the same or different and typically contain no more than about 12 carbon atoms each, and which preferably contain from 1 to 4 carbon atoms each. Most preferably these alkyl groups are methyl and/or ethyl groups. Polyamine reactants of this type may include dimethylaminopropylamine (DMAPA) and N-methyl piperazine.

Hydroxyamines suitable for herein include compounds, oligomers or polymers containing at least one primary or secondary amine capable of reacting with the hydrocarbyl-substituted succinic acid or anhydride. Examples of hydroxyamines suitable for use herein include aminoethylethanolamine (AEEA), aminopropyldiethanolamine (APDEA), ethanolamine, diethanolamine (DEA), partially propoxylated hexamethylene diamine (for example HMDA-2PO or HMDA-3PO), 3-amino-1,2-propanediol, tris(hydroxymethyl)aminomethane, and 2-amino-1,3-propanediol.

The mole ratio of amine to hydrocarbyl-substituted succinic acid or anhydride may range from 1:1 to about 3.0:1. Another example of a mole ratio of amine to hydrocarbyl-substituted succinic acid or anhydride may range from about 1.5:1 to about 2.0:1.

The foregoing dispersant may also be a post-treated dispersant made, for example, by treating the dispersant with maleic anhydride and boric acid as described, for example, in U.S. Patent No. 5,789,353 to Scattergood, or by treating the dispersant with nonylphenol, formaldehyde and glycolic acid as described, for example, in U.S. Patent No. 5,137,980 to DeGonia, et al.

The Mannich base dispersants may be a reaction product of an alkyl phenol, typically having a long chain alkyl substituent on the ring, with one or more aliphatic aldehydes containing from 1 to about 7 carbon atoms (especially formaldehyde and derivatives thereof), and polyamines (especially polyalkylene polyamines). For example, a Mannich base ashless dispersants may be formed by condensing about one molar proportion of long chain hydrocarbon-substituted phenol with from about 1 to about 2.5 moles of formaldehyde and from about 0.5 to about 2 moles of polyalkylene polyamine.

Hydrocarbon sources for preparation of the Mannich polyamine dispersants may be those derived from substantially saturated petroleum fractions and olefin polymers, such as polymers of mono-olefins having from 2 to about 6 carbon atoms. The hydrocarbon source generally contains, for example, at least about 40 carbon atoms, and as a further example, at least about 50 carbon atoms to provide substantial oil solubility to the dispersant. The olefin polymers having a GPC number average molecular weight between about 600 and 5,000 are suitable for reasons of easy reactivity and low cost. However, polymers of higher molecular weight can also be used. Especially suitable hydrocarbon sources are isobutylene polymers and polymers made from a mixture of isobutene and a raffinate I stream.

Suitable Mannich base dispersants may be Mannich base ashless dispersants formed by condensing about one molar proportion of long chain hydrocarbon-substituted phenol with from about 1 to 2.5 moles of formaldehyde and from about 0.5 to 2 moles of polyalkylene polyamine.

Polymeric polyamine dispersants suitable as the ashless dispersants are polymers containing basic amine groups and oil solubilizing groups (for example, pendant alkyl groups having at least about 8 carbon atoms). Such materials are illustrated by interpolymers formed from various monomers such as decyl methacrylate, vinyl decyl ether or relatively high molecular weight olefins, with aminoalkyl acrylates and aminoalkyl acrylamides. Examples of polymeric polyamine dispersants are set forth in U.S. Pat. Nos. 3,329,658; 3,449,250; 3,493,520; 3,519,565; 3,666,730; 3,687,849; and 3,702,300. Polymeric polyamines may include hydrocarbyl polyamines wherein the hydrocarbyl group is composed of the polymerization product of isobutene and a raffinate I stream as described above. PIB-amine and PIB-polyamines may also be used.

Methods for the production of ashless dispersants as described above are known to those skilled in the art and are reported in the patent literature. For example, the synthesis of various ashless dispersants of the foregoing types is described in such patents as U.S. Patent Nos. 2,459,112; 2,962,442, 2,984,550; 3,036,003; 3,163,603; 3,166,516; 3,172,892; 3,184,474; 3,202,678; 3,215,707; 3,216,936; 3,219,666; 3,236,770; 3,254,025; 3,271,310; 3,272,746; 3,275,554; 3,281,357; 3,306,908; 3,311,558; 3,316,177; 3,331,776; 3,340,281; 3,341,542; 3,346,493; 3,351,552; 3,355,270; 3,368,972; 3,381,022; 3,399,141; 3,413,347; 3,415,750; 3,433,744; 3,438,757; 3,442,808; 3,444,170; 3,448,047; 3,448,048; 3,448,049; 3,451,933; 3,454,497; 3,454,555; 3,454,607; 3,459,661; 3,461,172; 3,467,668; 3,493,520; 3,501,405; 3,522,179; 3,539,633; 3,541,012; 3,542,680; 3,543,678; 3,558,743; 3,565,804; 3,567,637; 3,574,101; 3,576,743; 3,586,629; 3,591,598; 3,600,372; 3,630,904; 3,632,510; 3,632,511; 3,634,515; 3,649,229; 3,697,428; 3,697,574; 3,703,536; 3,704,308; 3,725,277; 3,725,441; 3,725,480; 3,726,882; 3,736,357; 3,751,365; 3,756,953; 3,793,202; 3,798,165; 3,798,247; 3,803,039; 3,804,763; 3,836,471; 3,862,981; 3,872,019; 3,904,595; 3,936,480; 3,948,800; 3,950,341; 3,957,746; 3,957,854; 3,957,855; 3,980,569; 3,985,802; 3,991,098; 4,006,089; 4,011,380; 4,025,451; 4,058,468; 4,071,548; 4,083,699; 4,090,854; 4,173,540; 4,234,435; 4,354,950; 4,485,023; 5,137,980, and Re 26,433, herein incorporated by reference.

An example of a suitable ashless dispersant is a borated dispersant. Borated dispersants may be formed by boronating (borating) an ashless dispersant having basic nitrogen and/or at least one hydroxyl group in the molecule, such as a succinimide dispersant, succinamide dispersant, succinic ester dispersant, succinic ester-amide dispersant, Mannich base dispersant, or hydrocarbyl amine or polyamine dispersant.

The borated dispersant may contain at least one polyalkylene moiety. As a further example, the borated dispersant, may include at least two polyalkylene moieties. The polyalkylene moiety may have a molecular weight of from about 300 weight average molecular weight to about 3000 weight average molecular weight. The polyalkylene moiety, for example, may have a molecular weight of from about 1300 weight average molecular weight to about 2100 weight average molecular weight. As a further example, the polyalkylene moiety may have a molecular weight of about 2100 weight average molecular weight. The polyalkylene moiety may include a polybutenyl group. Methods that can be used for boronating the various types of ashless dispersants described above are described in U.S. Pat. Nos. 3,087,936; 3,254,025; 3,281,428; 3,282,955; 2,284,409; 2,284,410; 3,338,832; 3,344,069; 3,533,945; 3,658,836; 3,703,536; 3,718,663; 4,455,243; and 4,652,387.

The borated dispersant may include a high molecular weight dispersant treated with boron such that the borated dispersant includes up to 2 wt% of boron. As another example the borated dispersant may include from about 0.8 wt% or less of boron. As a further example, the borated dispersant may include from about 0.1 to about 0.7 wt% of boron. As an even further example, the borated dispersant may include from about 0.25 to about 0.7 wt% of boron. As a further example, the borated dispersant may include from about 0.35 to about 0.7 wt% of boron. The dispersant may be dissolved in oil of suitable viscosity for ease of handling. It should be understood that the weight percentages given here are for neat dispersant, without any diluent oil added.

A dispersant may be further reacted with an organic acid, an anhydride, and/or an aldehyde/phenol mixture. Such a process may enhance compatibility with elastomer seals, for example. The borated dispersant may further include a mixture of borated dispersants. As a further example, the borated dispersant may include a nitrogen-containing dispersant and/or may be free of phosphorus.

A suitable dispersant may be a phosphorylated dispersant. For example, a Mannich or a succinimide dispersant may be reacted with a phosphorous compound, such as a phosphorous-containing acid. Suitable phosphorous-containing acids include, for example, phosphorous acid (H₃PO₃), dibutyl hydrogen phosphite (DBHP), dialkyldithiophosphoric acids, and the like. Further, a succinimide dispersant, such as a polyisobutylene succinic anhydride, may be phosphorylated and/or boronated to provide a suitable dispersant.

A dispersant may be present in the power transmission fluid in an amount of about 0.1 wt% to about 10 wt%. Further, the power transmission fluid may include from about 2 wt% to about 7 wt% of the dispersant. Further, the power transmission fluid may include from about 3 wt% to about 5 wt% of the dispersant. Further, the power transmission fluid may include an amount of a borated dispersant sufficient to provide up to 1900 parts per million (ppm) by weight of boron in the finished fluid, such as for example, from about 50 to about 500 ppm by weight of boron in the finished fluid.

### Antiwear Agents

The antiwear agents may include phosphorus-containing antiwear agents which may include an organic ester of phosphoric acid, phosphorous acid, or an amine salt thereof. For example, the phosphorus-containing antiwear agent may include one or more of a dihydrocarbyl phosphite, a trihydrocarbyl phosphite, a dihydrocarbyl phosphate, a trihydrocarbyl phosphate, any sulfur analogs thereof, and any amine salts thereof. As a further example, the phosphorus-containing antiwear agent may include at least one of dibutyl hydrogen phosphite (such as HiTEC® 528 antiwear agent available from Ethyl Corporation) and an amine salt of sulfurized dibutyl hydrogen phosphite (such as HiTEC® 833 antiwear agent available from Ethyl Corporation).

The phosphorus-containing antiwear agent may be present in an amount sufficient to provide about 50 to about 500 parts per million by weight of phosphorus in the power transmission fluid. As a further example, the phosphorus-containing antiwear agent may be present in an amount sufficient to provide about 150 to about 300 parts per million by weight of phosphorus in the power transmission fluid.

The power transmission fluid may include from about 0.01 wt% to about 1.0 wt% of the phosphorus-containing antiwear agent. As a further example, the power transmission fluid may include from about 0.2 wt% to about 0.3 wt% of the phosphorus-containing antiwear agent. As an example, the power transmission fluid may include from about 0.1 wt% to about 0.2 wt% of a dibutyl hydrogen phosphite or 0.3 wt% to about 0.4 wt% an amine salt of a sulfurized dibutyl hydrogen phosphate.

### Friction Modifiers

Friction modifiers are used in automatic transmission fluids to decrease friction between surfaces (e.g., the members of a torque converter clutch or a shifting clutch) at low sliding speeds. The result is a friction-vs.-velocity (u-v) curve that has a positive slope, which in turn leads to smooth clutch engagements and minimizes "stick-slip" behavior (e.g., shudder, noise, and harsh shifts). Many conventional organic friction modifiers, however, are thermally unstable. Upon prolonged exposure to heat, these additives decompose, and the benefits they confer on clutch performance are lost. The friction-modifying succinimides of the present disclosure show unusual thermal stability. Compositions containing this friction modifier show little change in friction behavior upon thermal stressing.

Friction modifiers include such compounds as aliphatic amines or ethoxylated aliphatic amines, ether amines, alkoxylated ether amines, aliphatic fatty acid amides, acylated amines, aliphatic carboxylic acids, aliphatic carboxylic esters, polyol esters, aliphatic carboxylic ester-amides, imidazolines, tertiary amines, aliphatic phosphonates, aliphatic phosphates, aliphatic thiophosphonates, aliphatic thiophosphates, etc., wherein the aliphatic group usually contains one or more carbon atoms so as to render the compound suitably oil soluble. As a further example, the aliphatic group may contain about 8 or more carbon atoms. Also suitable are aliphatic substituted succinimides formed by reacting one or more aliphatic succinic acids or anhydrides with ammonia primary amines.

The succinimide may include the reaction product of a succinic anhydride and ammonia or primary amine. The alkenyl group of the alkenyl succinic acid may be a short chain alkenyl group, for example, the alkenyl group may include from about 12 to about 36 carbon atoms. Further, the succinimide may include a C₁₂ to about C₃₆ aliphatic hydrocarbyl succinimide. As a further example, the succinimide may include a C₁₆ to about C₂₈ aliphatic hydrocarbyl succinimide. As an even further example, the succinimide may include a C₁₈ to about C₂₄ aliphatic hydrocarbyl succinimide.

The succinimide may be prepared from a succinic anhydride and ammonia as described in European Patent Application No. 0 020 037, herein incorporated by reference. Further, the succinimide may include HiTEC® 3191 friction modifier, available from Ethyl Corporation. In some embodiments, no non-metallic friction modifier other than the succinimide disclosed herein is included.

The succinimide may include one or more of a compound having the following structure: 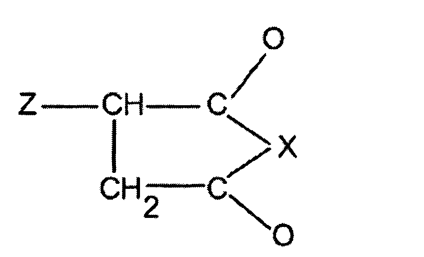 wherein Z may have the structure: 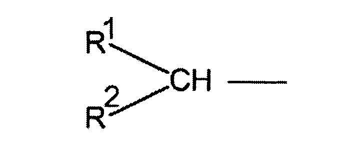 wherein either R¹ or R² may be hydrogen, but not both, and wherein R¹ and R² may be independently straight or branched chain hydrocarbon groups containing from about 1 to about 34 carbon atoms such that the total number of carbon atoms in R¹ and R² is from about 11 to about 35; X is an amino group derived from ammonia or a primary amine; and
wherein, in addition to or in the alternative, the parent succinic anhydride may be formed by reacting maleic acid, anhydride, or ester with an internal olefin containing about 12 to about 36 carbon atoms, said internal olefin being formed by isomerizing the olefinic double bond of a linear a-olefin or mixture thereof to obtain a mixture of internal olefins. The reaction may involve an equimolar amount of ammonia and may be carried out at elevated temperatures with the removal of water.

One group of friction modifiers includes the N-aliphatic hydrocarbyl-substituted diethanol amines in which the N-aliphatic hydrocarbyl-substituent is at least one straight chain aliphatic hydrocarbyl group free of acetylenic unsaturation and having in the range of about 14 to about 20 carbon atoms.

An example of a suitable friction modifier system is composed of a combination of at least one N-aliphatic hydrocarbyl-substituted diethanol amine and at least one N-aliphatic hydrocarbyl-substituted trimethylene diamine in which the N-aliphatic hydrocarbyl-substituent is at least one straight chain aliphatic hydrocarbyl group free of acetylenic unsaturation and having in the range of about 14 to about 20 carbon atoms. Further details concerning this friction modifier system are set forth in U.S. Pat. Nos. 5,372,735 and 5,441,656.

Another friction modifier system is based on the combination of (i) at least one di(hydroxyalkyl) aliphatic tertiary amine in which the hydroxyalkyl groups, being the same or different, each contain from 2 to about 4 carbon atoms, and in which the aliphatic group is an acyclic hydrocarbyl group containing from about 10 to about 25 carbon atoms, and (ii) at least one hydroxyalkyl aliphatic imidazoline in which the hydroxyalkyl group contains from 2 to about 4 carbon atoms, and in which the aliphatic group is an acyclic hydrocarbyl group containing from about 10 to about 25 carbon atoms. For further details concerning this friction modifier system, reference should be had to U.S. Pat. No. 5,344,579.

Another suitable group of friction modifiers include polyolesters, for example, glycerol monooleate (GMO), glycerol monolaurate (GML), and the like.

Generally speaking, the compositions may contain up to about 1.25 wt%, or, as a further example, from about 0.05 to about 1 wt% of one or more friction modifiers.

### Antioxidants

In some embodiments, antioxidant compounds may be included in the compositions. Antioxidants include phenolic antioxidants, aromatic amine antioxidants, sulfurized phenolic antioxidants, and organic phosphites, among others. Examples of phenolic antioxidants include 2,6-di-tert-butylphenol, liquid mixtures of tertiary butylated phenols, 2,6-di-tert-butyl-4-methylphenol, 4,4'-methylenebis(2,6-di-tert-butylphenol),2,2'-methylenebis(4-methyl6-ter t-butylphenol), mixed methylene-bridged polyalkyl phenols, and 4,4'-thiobis(2-methyl-6-tert-butylphenol). N,N'-di-sec-butyl-phenylenediamine, 4-isopropylaminodiphenylamine, phenyl-.alpha.-naphthyl amine, phenyl-.alpha.-naphthyl amine, and ring-alkylated diphenylamines. Examples include the sterically hindered tertiary butylated phenols, bisphenols and cinnamic acid derivatives and combinations thereof. The amount of antioxidant in the transmission fluid compositions described herein may range from about 0.01 to about 3.0 wt% based on the total weight of the fluid formulation. As a further example, antioxidant may be present in an amount from about 0.1 wt% to about 1.0 wt%.

### Corrosion inhibitors

In some embodiments, copper corrosion inhibitors may constitute another class of additives suitable for inclusion in the compositions. Such compounds include thiazoles, triazoles and thiadiazoles. Examples of such compounds include benzotriazole, tolyltriazole, octyltriazole, decyltriazole, dodecyltriazole, 2-mercapto benzothiazole, 2,5-dimercapto-1,3,4-thiadiazole, 2-mercapto-5-hydrocarbylthio-1,3,4-thiadiazoles, 2-mercapto-5- hydrocarbyldithio-1,3,4-thiadiazoles, 2,5-bis(hydrocarbylthio)- 1,3,4-thiadiazoles, and 2,5-bis(hydrocarbyldithio)-1,3,4-thiadiazoles. Suitable compounds include the 1,3,4-thiadiazoles, a number of which are available as articles of commerce, and also combinations of triazoles such as tolyltriazole with a 1,3,5-thiadiazole such as a 2,5-bis(alkyldithio)-1,3,4-thiadiazole. Materials of these types that are available on the open market include COBRATEC TT-100 and HiTEC® 4313 additive (Ethyl Corporation). The 1,3,4-thiadiazoles are generally synthesized from hydrazine and carbon disulfide by known procedures. See, for example, U.S. Pat. Nos. 2,765,289; 2,749,311; 2,760,933; 2,850,453; 2,910,439; 3,663,561; 3,862,798; and 3,840,549.

Rust or corrosion inhibitors are another type of inhibitor additive for use in embodiments of the present disclosure. Such materials include monocarboxylic acids and polycarboxylic acids. Examples of suitable monocarboxylic acids are octanoic acid, decanoic acid and dodecanoic acid. Suitable polycarboxylic acids include dimer and trimer acids such as are produced from such acids as tall oil fatty acids, oleic acid, linoleic acid, or the like. Products of this type are currently available from various commercial sources, such as, for example, the dimer and trimer acids sold under the HYSTRENE trademark by the Humko Chemical Division of Witco Chemical Corporation and under the EMPOL trademark by Henkel Corporation. Another useful type of rust inhibitor may comprise alkenyl succinic acid and alkenyl succinic anhydride corrosion inhibitors such as, for example, tetrapropenylsuccinic acid, tetrapropenylsuccinic anhydride, tetradecenylsuccinic acid, tetradecenylsuccinic anhydride, hexadecenylsuccinic acid, hexadecenylsuccinic anhydride, and the like. Also useful are the half esters of alkenyl succinic acids having 8 to 24 carbon atoms in the alkenyl group with alcohols such as the polyglycols. Other suitable rust or corrosion inhibitors include ether amines; acid phosphates; amines; polyethoxylated compounds such as ethoxylated amines, ethoxylated phenols, and ethoxylated alcohols; imidazolines; aminosuccinic acids or derivatives thereof, and the like. Materials of these types are available as articles of commerce. Mixtures of such rust or corrosion inhibitors can be used. The amount of corrosion inhibitor in the transmission fluid formulations described herein may range from about 0.01 to about 2.0 wt% based on the total weight of the formulation.

### Antifoam agents

In some embodiments, a foam inhibitor may form another component suitable for use in the compositions. Foam inhibitors may be selected from silicones, polyacrylates, surfactants, and the like. One suitable acrylic defoamer material is PC-1244 available from Monsanto Company. The amount of antifoam agent in the transmission fluid formulations described herein may range from about 0.01 wt% to about 0.5 wt% based on the total weight of the formulation. As a further example, antifoam agent may be present in an amount from about 0.01 wt% to about 0.1 wt%.

### Seal swell agents

The seal swell agent used in the transmission fluid compositions described herein is selected from oil-soluble diesters, oil-soluble sulfones, and mixtures thereof. Generally speaking the most suitable diesters include the adipates, azelates, and sebacates of C₈-C₁₃ alkanols (or mixtures thereof), and the phthalates of C₄-C₁₃ alkanols (or mixtures thereof). Mixtures of two or more different types of diesters (e.g., dialkyl adipates and dialkyl azelates, etc.) can also be used. Examples of such materials include the n-octyl, 2-ethylhexyl, isodecyl, and tridecyl diesters of adipic acid, azelaic acid, and sebacic acid, and the n-butyl, isobutyl, pentyl, hexyl, heptyl, octyl, nonyl, decyl, undecyl, dodecyl, and tridecyl diesters of phthalic acid.

Other esters which may give generally equivalent performance are polyol esters such as EMERY 2935, 2936, and 2939 esters from the Emery Group of Henkel Corporation and HATCOL 2352, 2962, 2925, 2938, 2939, 2970, 3178, and 4322 polyol esters from Hatco Corporation.

Suitable sulfone seal swell agents are described in U.S. Pat. Nos. 3,974,081 and 4,029,587. Lubrizol 730 additive (The Lubrizol Corporation) is understood to be a commercially-available sulfone type seal swell agent. Typically these products are employed at levels in the range of about 0.25 wt% to about 5 wt % in the finished transmission fluid. As a further example, they may be provided in an amount of about 0.25 wt% to about 1 wt%.

Suitable seal swell agents are the oil-soluble dialkyl esters of (i) adipic acid, (ii) sebacic acid, or (iii) phthalic acid. The adipates and sebacates should be used in amounts in the range of from about 1 to about 15 wt% in the finished fluid. In the case of the phthalates, the levels in the transmission fluid should fall in the range of from about 1.5 to about 10 wt%. Generally speaking, the higher the molecular weight of the adipate, sebacate or phthalate, the higher should be the treat rate within the foregoing ranges.

Additives used in formulating the compositions described herein can be blended into the base oil individually or in various sub-combinations. However, it is suitable to blend all of the components concurrently using an additive concentrate (i.e., additives plus a diluent, such as a hydrocarbon solvent). The use of an additive concentrate takes advantage of the mutual compatibility afforded by the combination of ingredients when in the form of an additive concentrate. Also, the use of a concentrate reduces blending time and lessens the possibility of blending errors.

The power transmission fluids disclosed herein may include fluids suitable for any power transmitting application, such as a step automatic transmission or a manual transmission. Further, the power transmission fluids of the present disclosure are suitable for use in transmissions with a slipping torque converter, a lock-up torque converter, a starting clutch, and/or one or more shifting clutches. Such transmissions include four-, five-, six-, and seven-speed transmissions, and continuously variable transmissions (chain, belt, or disk type). They may also be used in manual transmissions, including automated manual and dual-clutch transmissions.

FIG. 1 and the following table illustrates the coefficient of friction characteristics of transmission fluids on a carbon fiber friction plate at speeds ranging from 1 to 300 rpm. This behavior is relevant to the performance of a fluid in a torque converter clutch. The u-v profiles shown in these figures were obtained with an SAE No. 2 machine as described in SAE 940821, herein incorporated by reference. The coefficients of friction were determined at an applied pressure of 890 kPa, a temperature of 120°C, and a slip time of 2.9 seconds. FIG. 1 and the following table show the u-v characteristics of baseline fluids with and without viscosity index improvers (VII's). The fluid tested include a baseline fluid (ran in duplicate; Baseline 1 and Baseline 1A) which is an example of the typical ATF, without viscosity modifier, a description of which, by component type, follows:

| Component type | wt% in finished fluid |
|---|---|
| friction modifier(s) | 0.01 to 0.5 |
| sulfur agent(s) | 0.01 to 1.5 |
| anti-oxidant(s) | 0.01 to 2.0 |
| anti-rust agent(s) | 0.01 to 0.3 |
| anti-wear agent(s) | 0.05 to 5.0 |
| detergent(s) | 0.01 to 1.0 |
| dispersant(s) | 0.5 to 10.0 |
| anti-foam agent(s) | 0.0001 to 0.5 |
| base oil (mineral and/or synthetic) | remaining |

The other fluids in the table and chart contained the baseline fluid and one of the following thickening agents:
VII A is polyisobutylene having a number average molecular weight of 1200.
VII B is a 2100 MW_{N} Mannich dispersant.
VII C is a 2100 MW_{N} PIBSA plus a polyamine post treated with nonylphenol, formaldehyde, and glycolic acid and having a SA/PIB mol ratio of greater than about 1.1.
VII D is a 1300 MW_{N} PIBSA plus a polyamine.
VII E is a 2100 MW_{N} PIB-phenol Mannich reaction product.
VII F is a 2100 MW_{N} PIBSA plus a polyamine having a SA/PIB ratio of greater than about 1.1.

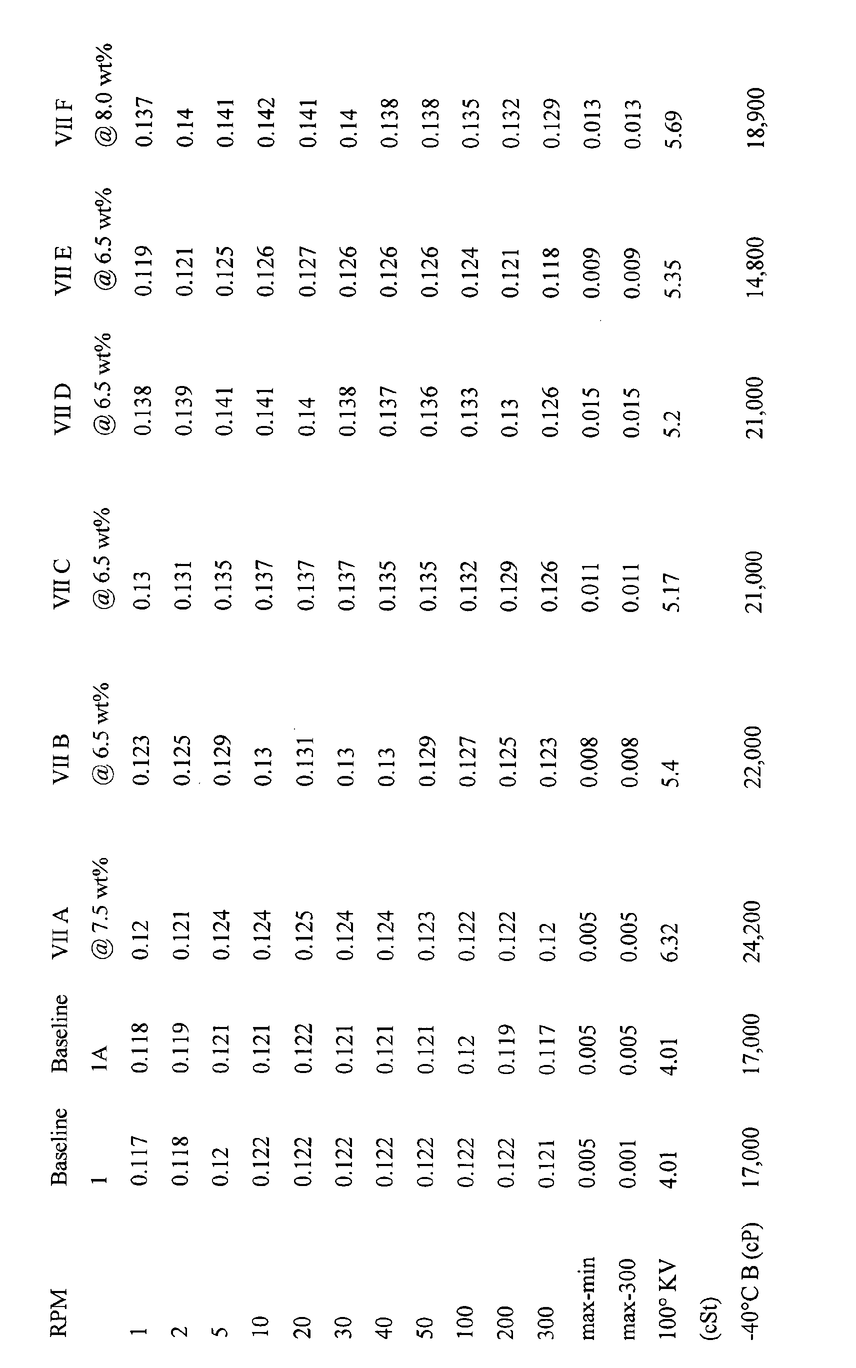

As shown by the foregoing table and FIG. 1, a baseline fluid absent a functionalized dispersant has acceptable coefficient of friction (u) characteristics over an rpm range of 1 to 300 wherein the difference between the maximum u and the minimum u is 0.005. However the kinematic viscosity and the Brookfield viscosity of the baseline fluid are low. A baseline fluid containing 7.5 wt% of the thickening agent according to the embodiments described herein (VII A) had a higher kinematic viscosity (KV) and a substantially higher Brookfield viscosity (BV) than the baseline fluid, however the difference between the maximum u and the minimum u were the same as the baseline fluid. This result is compared with the other thickening agents listed in the table. As can be seen all of the other thickening agents VII B to VII F had greater differences between the maximum u and minimum u and lower viscosities than VII A.

At numerous places throughout this specification, reference has been made to a number of U.S. Patents. All such cited documents are expressly incorporated in full into this disclosure as if fully set forth herein.

Other embodiments will be apparent to those skilled in the art from consideration of the specification and practice of the invention disclosed herein. As used throughout the specification and claims, "a" and/or "an" may refer to one or more than one. Unless otherwise indicated, all numbers expressing quantities of ingredients, properties such as molecular weight, percent, ratio, reaction conditions, and so forth used in the specification and claims are to be understood as being modified in all instances by the term "about." Accordingly, unless indicated to the contrary, the numerical parameters set forth in the specification and claims are approximations that may vary depending upon the desired properties sought to be obtained by the present invention. At the very least, and not as an attempt to limit the application of the doctrine of equivalents to the scope of the claims, each numerical parameter should at least be construed in light of the number of reported significant digits and by applying ordinary rounding techniques. Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard deviation found in their respective testing measurements. It is intended that the specification and examples be considered as exemplary only, with a true scope and spirit of the invention being indicated by the following claims.

## Claims

1. An additive composition for a transmission fluid, the additive composition including:
a viscosity index improving amount of a polyisoalkylene component having a molecular weight ranging from 300 to 10,000 weight average molecular weight as determined by gel permeation chromatography, and
5 wt% to 25 wt% base oil, and
wherein a power transmission fluid containing 1 wt% to 30 wt% of the additive composition has a kinematic viscosity at 100°C of less than 9 centistokes and a Brookfield viscosity at -40°C of less than 30,000 centipoise, and wherein a slope of a friction versus velocity curve at high speeds for the power transmission fluid is more positive than a slope of a friction versus velocity curve at high speeds for a similar power transmission fluid that does not include the polyisoalkylene component.

2. The additive composition of claim 1, further including one or more viscosity index improvers selected from polymethacrylates, olefin copolymers, and styrene-maleic esters.

3. The additive composition of any one of claims 1-2, wherein the polyisoalkylene includes polyisobutylene having a weight average molecular weight ranging from 500 to 3000.

4. The additive composition of claim 3, wherein the polyisobutylene is hydrogenated.

5. The additive composition of any one of claims 1-4, wherein the additive composition includes from 10 wt% to 90 wt% polyisoalkylene component.

6. The additive composition of any one of claims 1-5, further including one or more of an ashless dispersant, an antioxidant, an antiwear agent, a friction modifier, an antifoam agent, and a corrosion inhibitor.

7. The additive composition of claim 6, wherein the ashless dispersant includes one or more of hydrocarbyl succinimides, hydrocarbyl succinamides, polyol esters, mixed ester/amides of hydrocarbyl substituted succinic acid, and Mannich condensation products of hydrocarbyl-substituted phenols, formaldehyde and polyamines.

8. The additive composition of any one of claims 6-7, wherein the friction modifier includes one or more of aliphatic fatty amines, ether amines, alkyoxylated aliphatic fatty amines, alkoxylated ether amines, oil-soluble aliphatic carboxylic acids, polyol esters, fatty acid amides, acylated amines, imidazolines, tertiary amines, and hydrocarbyl succinimides reacted with ammonia or a primary amine.

9. The additive composition of any one of claims 6-8, wherein the antioxidant includes one or more of bis-alkylated diphenyl amines, phenyl alpha or beta napthyl amines, sterically hindered phenols, bisphenols, and cinnamic acid derivatives.

10. The additive composition of any one of claims 6-9, wherein the antiwear agent includes one or more of phosphate esters and salts thereof, phosphite esters and salts thereof, dialkyldithiophosphoric acid esters and salts thereof, phosphoric acids, and phosphorus acids.

11. The additive composition of any one of claims 6-10, wherein the antifoam agent includes one or more of silicones and polyacrylates.

12. A power transmission fluid including an additive composition as claimed in any one of claims 1-11, and a base oil, and wherein the additive composition is present in an amount of 5 wt% to 50 wt% of the power transmission fluid.

13. The power transmission fluid of claim 12, wherein the fluid is suitable for use in a transmission employing one or more of a slipping torque converter, a lock-up torque converter, a starting clutch, and one or more shifting clutches.

14. The power transmission fluid of claim 12, wherein the fluid is suitable for use in one or more of a belt, chain, and disk-type continuously variable transmission.

15. The power transmission fluid of any one of claims 12-14, wherein the base oil includes one or more of a natural oil, a mixture of natural oils, a synthetic oil, a mixture of synthetic oils, and a mixture of natural and synthetic oils.

16. The power transmission fluid of any one of claims 12-15, wherein the natural oil includes one or more of a mineral oil, a vegetable oil, and a mixture of mineral oil and vegetable oil.

17. The power transmission fluid of any one of claims 12-16, wherein the synthetic oil is includes one or more of an oligomer of an alphaolefin, an ester, an oil derived from a Fischer-Tropsch process, a gas-to-liquid stock, and a mixture thereof.

18. The power transmission fluid of any one of claims 12-17, wherein the base oil has a kinematic viscosity of from 2 centistokes to 10 centistokes at 100° C.

19. An automatic transmission containing the power transmission fluid of any one of claims 12-18.

20. The automatic transmission of claim 19, wherein the automatic transmission includes a constantly variable transmission.

21. The automatic transmission of claim 19, wherein the transmission includes a carbon fiber friction plate.

22. A method of improving shear stability for a transmission fluid including the steps of:
providing a base oil; and
adding to the base oil an additive composition as claimed in any one of claims 1-11.

23. The method of claim 22, wherein the base oil includes one or more of a natural oil, a mixture of natural oils, a synthetic oil, a mixture of synthetic oils, and a mixture of natural and synthetic oils.

24. The method of any one of claims 22-23, wherein the natural oil includes one or more of a mineral oil, a vegetable oil, and a mixture of mineral oil and vegetable oil.

25. The method of any one of claims 22-24, wherein the synthetic oil includes one or more of an oligomer of an alphaolefin, an ester, an oil derived from a Fischer-Tropsch process, a gas-to-liquid stock, and a mixture thereof.

26. The method of any one of claims 22-25, wherein the base oil has a kinematic viscosity of from about 2 centistokes to about 10 centistokes at 100° C.

27. The method of any one of claims 22-26, wherein the fluid is suitable for use in a transmission employing one or more of a slipping torque converter, a lock-up torque converter, a starting clutch, and one or more shifting clutches.

28. The method of any one of claims 22-26, wherein the fluid is suitable for use in a belt, chain, or disk-type continuously variable transmission.

29. A vehicle including an engine and a transmission, the transmission including the power transmission fluid of any one of claims 12-17.

30. The vehicle of claim 29, wherein the automatic transmission includes a carbon fiber containing friction plate.
